# FASCICULE DE BREVET EUROPEEN

(11) **EP 4 234 335 B1**
(45) Date de publication et mention de la délivrance du brevet: **06.11.2024**
(21) Numéro de dépôt: 23156721.5
(22) Date de dépôt: 15.02.2023
(51) Int. Cl.: B60R 9/045, B60R 9/058

(54) **VÉHICULE ÉQUIPÉ DE BARRES DE TOIT MODULABLES ET INVIOLABLES**
FAHRZEUG MIT MODULAREN UND MANIPULATIONSSICHEREN DACHLEISTEN
VEHICLE WITH MODULAR AND TAMPER-PROOF ROOF BARS

(30) Priorité: 28.02.2022 FR 2201718
(43) Date de publication de la demande: 30.08.2023
(73) Titulaire: Renault s.a.s, 92100 Boulogne Billancourt (FR)
(72) Inventeur: BURICEL, Catalin-Silviu, 022147 BUCAREST (RO)

(56) Documents cités:
- DE-A1- 102005 017 884
- JP-A- 2002 019 532
- US-A1- 2006 060 621
- US-A1- 2006 163 297
- US-A1- 2008 257 924

## Description

La présente invention concerne un véhicule équipé de barres de toit modulables et inviolables.

Afin de bien comprendre le positionnement des différentes pièces impliquées dans un véhicule selon l'invention, la description est réalisée en faisant référence à un repère orthonormé direct XYZ lié à ce véhicule et dans lequel X est un axe longitudinal avant-arrière du véhicule orienté vers l'arrière, Y est un axe transversal orienté vers la droite du véhicule et Z est un axe vertical dirigé vers le haut.

Actuellement, certains véhicules automobiles possèdent deux barres de toit parallèles, s'étendant de chaque côté du toit suivant un axe longitudinal X du véhicule. Pour une partie de ces véhicules, ces barres peuvent être démontées, puis être ensuite fixées sur le toit dans différentes configurations, de manière à favoriser l'arrimage d'objets particuliers, tels que par exemple des bagages, des vélos, différents équipements, etc. Dans ces différentes configurations, les barres de toit peuvent par exemple s'étendre le long d'un axe transversal Y du véhicule, ou le long d'un axe possédant à la fois une composante suivant ledit axe transversal Y et une composante suivant un axe longitudinal X du véhicule.

Or, le passage des barres de toit d'une configuration à une autre nécessite qu'elles soient démontées, puis retirées du toit avant d'être replacées puis fixées dans la nouvelle position sur ledit toit. En d'autres termes, ces barres de toit démontables, qui sont fixées sur le toit d'un véhicule dans une configuration donnée, sont facilement accessibles par n'importe qui depuis l'extérieur du véhicule, et peuvent donc être facilement dérobées, sans avoir à fracturer le véhicule Un tel véhicule est connu du document US 2006/163297 A1.

Un véhicule selon l'invention possède des barres de toit démontables présentant un caractère d'inviolabilité, grâce à l'utilisation d'un mécanisme de fixation simple et judicieux ne pouvant être piloté que par le conducteur du véhicule.

L'invention a pour objet un véhicule comprenant un toit, et deux barres de toit fixées chacune sur ledit toit par l'intermédiaire d'au moins une pièce support, lesdites deux barres étant démontables pour pouvoir passer d'une première position pour laquelle elles sont parallèles et s'étendent suivant un axe longitudinal X du véhicule, à une deuxième position qui est inclinée par rapport à la première position.

Selon l'invention, chaque barre de toit comprend pour chaque pièce support sur laquelle elle est montée, un mécanisme de fixation comportant un élément de commande, une source énergétique pouvant être activée par ledit élément de commande, une tige de transmission rigide possédant deux parois en regard l'une de l'autre, et un pion de fixation traversant la barre de toit et la pièce support pour assurer l'arrimage de ladite barre de toit à ladite pièce support, la tige de transmission étant apte à passer au moyen d'une activation de la source énergétique par l'élément de commande, d'une position de verrouillage pour laquelle les deux parois en regard l'une de l'autre enserrent étroitement le pion de fixation, à une position de déverrouillage pour laquelle ladite tige s'est déplacée de sorte que ledit pion de fixation ne soit plus placé entre lesdites deux parois. De cette manière, le déplacement de la tige de transmission induite par l'activation de la source énergétique, permet de libérer le pion qui pourra ensuite être manipulé par une personne pour assurer le retrait de la barre de toit ou son déplacement sur le toit du véhicule. Les deux parois en regard l'une de l'autre agissent en quelque sorte comme des mâchoires, qui figent la position du pion en empêchant celui-ci de se déplacer. Ces deux parois peuvent par exemple être représentées par deux bras parallèles ou par deux parois délimitant une ouverture de la tige de transmission. La source énergétique peut par exemple être constituée par un moteur électrique. Cette source énergétique peut, soit directement provoquer le déplacement de la tige de transmission, soit provoquer le déplacement de ladite tige par l'intermédiaire d'une pièce relais qui sera elle-même directement déplacée par la source énergétique. L'élément de commande peut par exemple être classiquement constitué par un bouton de commande, pouvant par exemple être de type bouton-poussoir ou molette. Cet élément de commande est avantageusement placé dans un habitacle du véhicule, de manière à ne pas être accessible par n'importe qui. La tige rigide est déplacée sans être soumise à la moindre sollicitation, c'est-à-dire en conservant sa forme initiale. Préférentiellement, la tige de transmission s'étend selon un axe longitudinal X et horizontal du véhicule et le pion s'étend suivant un axe vertical Z. La deuxième position des barres de toit peut par exemple être une position pour laquelle les deux barres de toit sont parallèles et s'étendent suivant un axe transversal Y du véhicule. Cette deuxième position peut également être une position intermédiaire, suivant un axe possédant une composante suivant un axe transversal Y du véhicule et une composante suivant un axe longitudinal dudit véhicule. Pour cette dernière configuration, les deux barres de toit peuvent se croiser sur le toit du véhicule.

Selon une caractéristique possible de l'invention, la source énergétique est une source électrique à choisir parmi un moteur électrique pas à pas, un actionneur linéaire et un système d'asservissement. Ce type de source énergétique est particulièrement adaptée au déplacement de pièces mécaniques avec une faible amplitude, typiquement inférieure à 5cm, et plus avantageusement inférieure à 2cm.

Selon une caractéristique possible de l'invention, l'élément de commande est à choisir parmi un bouton de commande qui est placé dans un habitacle du véhicule et qui est facilement accessible par le conducteur dudit véhicule, et un dispositif électronique portatif doté d'une application dédiée au verrouillage/déverrouillage des barres de toit dudit véhicule. L'élément de commande ne doit pas être accessible par les personnes qui se déplacent autour du véhicule en étant étrangères audit véhicule. De cette manière, cet élément de commande peut être un bouton de commande qui est placé à l'intérieur d'un habitacle du véhicule et, sauf à disposer d'un moyen d'ouverture des portes, qui n'est pas accessible par n'importe quelle personne placée à l'extérieur du véhicule. Une autre catégorie d'élément de commande particulièrement adapté à un véhicule selon l'invention, peut par exemple être constitué par un smartphone ou une tablette électronique disposant d'une application dédiée au déverrouillage des barres de toit dudit véhicule. Il suffira de rentrer dans cette application un code exclusivement réservé au véhicule, pouvant par exemple être le numéro des plaques d'immatriculation, pour parvenir à une page à partir de laquelle pourra être activé le déverrouillage des barres de toit par pression tactile sur un écran.

Selon une caractéristique possible de l'invention, le mécanisme de fixation comprend un levier monté en rotation sur la source énergétique, une première extrémité du levier étant solidarisée à un axe de rotation de ladite source énergétique et une deuxième extrémité dudit levier étant montée articulée à une extrémité amont de la tige de transmission, de sorte qu'une activation de la source énergétique au moyen de l'élément de commande entraine une mise en rotation de l'axe de rotation engendrant une mise en rotation du levier s'accompagnant d'un déplacement simultané de la tige de transmission. Pour cette configuration, le levier mis en rotation agit comme une bielle en provoquant un déplacement sensiblement linéaire de la tige de transmission pour déverrouiller le pion de fixation. Avantageusement, le levier pivote avec une amplitude qui est inférieure ou égale à 15°. Pour être plus précis, la source énergétique est protégée par un boitier, et l'axe de rotation émerge dudit boitier et peut être mis en rotation par une activation de ladite source énergétique.

Selon une caractéristique possible de l'invention, le mécanisme de fixation comprend une roue crantée solidarisée à un axe de rotation de la source énergétique, la tige de transmission présentant des crans sur au moins une partie de sa longueur, de sorte qu'une activation de la source énergétique au moyen de l'élément de commande entraine une mise en rotation de l'axe de rotation engendrant une mise en rotation de la roue crantée s'accompagnant d'un déplacement simultané en translation de la tige de transmission grâce à un engrènement entre ladite roue crantée et ladite tige de transmission. Pour cette configuration, la tige de transmission se déplace rigoureusement en translation.

Selon une caractéristique possible de l'invention, une extrémité aval de la tige de transmission comporte une pièce terminale dotée d'une ouverture comprenant une zone élargie et au moins une zone rétrécie, dans la position de verrouillage de la tige de transmission le pion de fixation étant étroitement inséré dans ladite zone rétrécie et dans la position de déverrouillage de ladite tige ledit pion de fixation se retrouvant dans la zone élargie. La zone rétrécie est délimitée par les deux parois en regard l'une de l'autre qui enserrent étroitement le pion de fixation. Le déplacement de la tige de transmission va entrainer un déplacement simultané de l'ouverture, de sorte que la zone rétrécie va s'éloigner du pion de fixation et la zone élargie va venir se positionner au niveau du pion de fixation.

Selon une caractéristique possible de l'invention, l'ouverture est allongée et la zone élargie est placée dans une zone centrale de ladite ouverture, la pièce terminale possédant deux zones rétrécies placées de part et d'autre de la zone élargie centrale le long d'un axe longitudinal de ladite ouverture. De cette manière, un tel mécanisme offre deux possibilités différentes de verrouiller le pion de fixation, à travers la présence des deux zones rétrécies.

Selon une caractéristique possible de l'invention, une extrémité aval de la tige de transmission comporte une pièce terminale possédant deux bras parallèles, dans la position de verrouillage de la tige de transmission le pion de fixation étant étroitement inséré entre lesdits deux bras, et dans la position de déverrouillage de ladite tige ledit pion se retrouve en dehors de l'espace délimité par les deux bras. Ces deux bras parallèles vont matérialiser les deux parois en regard l'une de l'autre entre lesquelles le pion de fixation sera bloqué. Pour cette configuration, la tige de transmission est assimilable à une fourchette dont l'extrémité est apte à venir enserrer le pion de fixation.

Selon une caractéristique possible de l'invention, le pion de fixation possède un corps central cylindrique possédant une première extrémité cylindrique élargie et une deuxième extrémité cylindrique élargie dont le diamètre est supérieur à celui de la première extrémité élargie. Il s'agit d'une première variante de réalisation d'un pion de fixation d'un véhicule selon l'invention. Un tel pion de fixation est inséré dans la pièce support de sorte qu'une paroi de ladite pièce support et une paroi d'une barre de toit, vont se placer entre la première extrémité cylindrique élargie et la deuxième extrémité cylindrique élargie dudit pion. Une fois déverrouillé, un tel pion sera manipulé de manière à désolidariser la barre de toit de ladite pièce support.

Selon une caractéristique possible de l'invention, le pion de fixation possède sur au moins une partie de sa longueur une section transversale étoilée, ledit pion de fixation étant inséré dans la pièce support en étant décalé par rapport à une ouverture étoilée de ladite pièce support, de sorte qu'une fois déverrouillé ledit pion de fixation puisse être manipulé en rotation pour le mettre en correspondance avec ladite ouverture étoilée afin de le faire coulisser dans celle-ci. De cette manière, dans une configuration de verrouillage, la section transversale étoilée du pion de fixation est décalée par rapport à l'ouverture étoilée de l'ouverture de la pièce support. Pour déverrouiller la barre de toit, il faut d'abord libérer en mouvement le pion de fixation. Une fois cette libération obtenue, il faut faire pivoter manuellement le pion de manière à faire correspondre parfaitement la section transversale étoilée dudit pion et l'ouverture étoilée de la pièce support. Le pion peut alors coulisser dans ladite ouverture afin de pouvoir retirer la barre de toit, du toit du véhicule.

Un véhicule selon l'invention présente l'avantage de posséder des barres de toit aptes à passer d'une première position longitudinale pour laquelle elles s'étendent le long d'un axe longitudinal X du véhicule à une deuxième position inclinée par rapport à la première position, sans nécessiter un quelconque outil et sans avoir à procéder à des manipulations compliquées nécessitant de la force et/ou de la précision. De plus, grâce à la présence d'un mécanisme de fixation judicieux et de conception simple, et d'un élément de commande qui n'est accessible que par le conducteur du véhicule, un véhicule selon l'invention a l'avantage de posséder des barres de toit inviolables.

On donne ci-après une description détaillée d'un mode de réalisation préféré d'un véhicule selon l'invention en se référant aux figures suivantes :
[Fig. 1] représente une vue du dessus d'un toit d'un véhicule selon l'invention, les barres de toit étant dans une première configuration,
[Fig. 2] représente une vue du dessus d'un toit d'un véhicule selon l'invention, les barres de toit étant dans une deuxième configuration,
[Fig. 3] représente une vue du dessus d'un toit d'un véhicule selon l'invention, les barres de toit étant dans une troisième configuration,
[Fig. 4] représente une vue de côté d'une barre de toit et de deux pièces support d'un véhicule selon l'invention,
[Fig. 5] représente une vue en perspective d'une pièce support et d'une partie d'une barre de toit d'un véhicule selon l'invention, montrant un premier mode de réalisation d'un mécanisme de fixation placé dans ladite pièce support,
[Fig. 6] représente une vue en perspective du premier mode de réalisation du mécanisme de fixation de la figure 5,
[Fig. 7] représente une vue en perspective d'une pièce support d'un véhicule selon l'invention, et dans laquelle est placé le premier mode de réalisation du mécanisme de fixation des figures 5 et 6,
[Fig. 8] représente une vue en perspective d'une zone d'une pièce support d'une barre de toit d'un véhicule selon l'invention, montrant un deuxième mode de réalisation d'un mécanisme de fixation,
[Fig. 9] représente une vue en perspective du deuxième mode de réalisation du mécanisme de fixation de la figure 8,

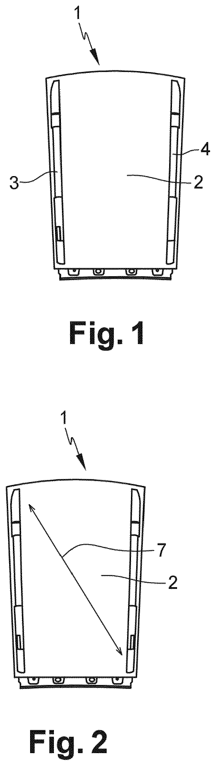

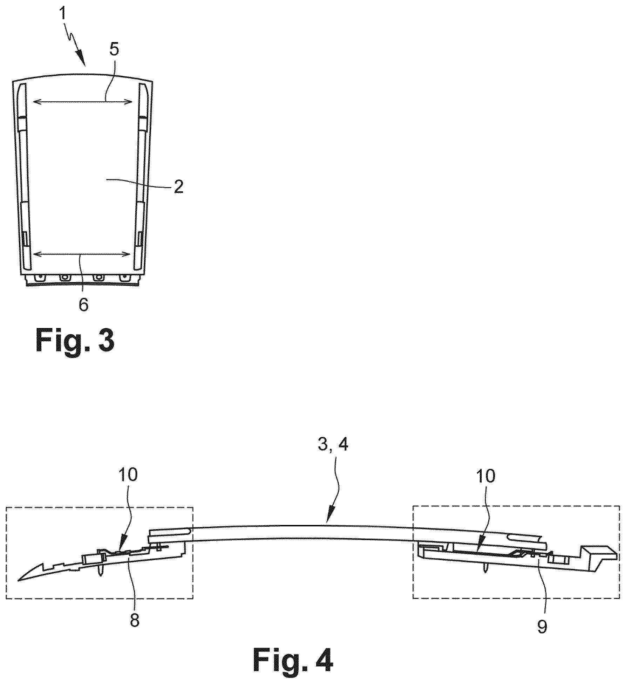

En se référant aux figures 1 à 3, un véhicule 1 selon l'invention possède un toit 2 sur lequel viennent se fixer deux barres 3, 4 de toit pouvant se retrouver dans au moins trois configurations distinctes :
- une première configuration pour laquelle les deux barres 3, 4 de toit sont parallèles et s'étendent le long d'un axe longitudinal X du véhicule, comme illustré à la figure 1,
- une deuxième configuration pour laquelle les deux barres 3, 4 de toit sont parallèles et s'étendent le long d'un axe transversal Y du véhicule comme l'illustrent les deux flèches 5, 6 de la figure 3,
- une troisième configuration pour laquelle au moins l'une des deux barres 3, 4 s'étend le long d'un axe possédant une composante suivant un axe longitudinal X et une composante suivant un axe transversal Y du véhicule comme l'illustre la flèche 7 de la figure 2.

Pour passer d'une configuration à une autre, les deux barres 3, 4 de toit doivent être démontées, de manière à pouvoir être désolidarisées puis retirées du toit, afin d'être remontées dans une autre position sur celui-ci. Un problème immédiat lié à ce démontage possible des barres de toit 3, 4 est que celles-ci peuvent être démontées par n'importe qui dans la rue et peuvent donc être facilement dérobées.

Afin de remédier à ce problème, un véhicule 1 selon l'invention met en oeuvre un mécanisme de fixation de la barre de toit pouvant facilement être désactivé au moyen d'un élément de commande à distance, qui n'est seulement accessible que par le conducteur du véhicule. Le terme « à distance » signifie que l'élément de commande n'est pas positionné à l'extérieur du véhicule, à proximité des barres de toit 3, 4.

En se référant à la figure 4, une barre de toit 3, 4 d'un véhicule 1 selon l'invention est fixée au toit 2 par l'intermédiaire de deux pièces support 8, 9 fixes, chacune desdites pièces support 8, 9 étant allongée et s'étendant suivant un axe longitudinal X du véhicule. Autrement dit, une barre de toit 3, 4 est solidarisée à une pièce support 8, 9 au moyen d'un mécanisme de fixation 10 qui est inclut dans ladite pièce support 3, 4, tandis que cette pièce support 3, 4 est arrimée au toit 2 du véhicule 1 de façon à être fixe. De cette manière, il n'existe qu'un seul mécanisme de fixation par pièce support 3, 4.

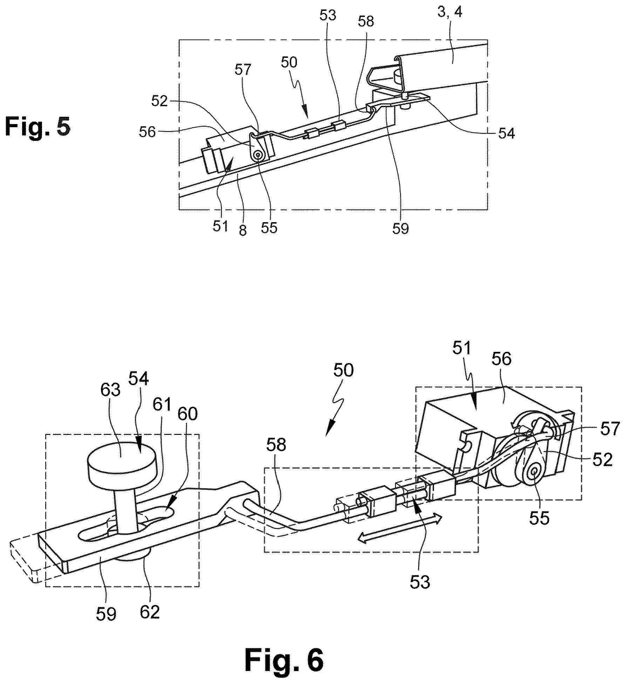

En se référant aux figures 5, 6, 7, un premier mode de réalisation d'un véhicule selon l'invention met en oeuvre un mécanisme de fixation 50 d'une barre de toit 3, 4 à une pièce support 8, 9, comprenant une source énergétique 51, un levier 52, une tige de transmission 53, un pion de fixation 54 et un élément de commande apte à activer la source énergétique 51. La source énergétique 51 peut par exemple être constituée par un moteur électrique pas à pas, un actionneur linéaire ou un système d'asservissement. Le levier 52 est fixé à un axe de rotation 55 cylindrique traversant un carter 56 de la source énergétique 51, ledit axe de rotation 55 étant apte à être mis en rotation autour de son axe de révolution au moyen d'une activation de ladite source énergétique 51 par l'élément de commande. Le levier 52 est allongé et comprend une première extrémité qui est fixée à l'axe de rotation 55 et une deuxième extrémité qui est montée pivotante à une extrémité amont 57 de la tige de transmission 53. Le levier 52 est monté sur l'axe de rotation 55 en étant perpendiculaire audit axe de rotation 55. La tige de transmission 53 est allongée et présente donc l'extrémité amont 57 et une extrémité aval 58, lesdites deux extrémités 57, 58 étant à considérer par rapport à un axe longitudinal de ladite tige de transmission 53, ladite extrémité aval 58 étant prolongée par une pièce terminale 59 allongée dont un axe longitudinal est parallèle à un axe longitudinal de la tige de transmission 53. Cette pièce terminale 59 est montée de façon fixe sur la tige de transmission 53, et possède une ouverture 60 allongée dont un axe longitudinal est parallèle à un axe longitudinal de ladite pièce terminale 59. Cette ouverture allongée 60 présente une zone centrale élargie, prolongée de chaque côté par une zone rétrécie. Le pion de fixation 54 présente un corps 61 central cylindrique possédant une première extrémité 62 cylindrique élargie et une deuxième extrémité 63 cylindrique élargie, dont le diamètre est supérieur à celui de la première extrémité 62 élargie. Le diamètre de la première extrémité élargie 62 est inférieur à celui de la zone élargie centrale de l'ouverture 60 de la pièce terminale 59. Le pion de fixation 54 passe dans l'ouverture 60 de la pièce terminale 59 de la tige de transmission 53 en étant perpendiculaire à un plan moyen dans lequel s'inscrirait la pièce terminale 59. Le pion de fixation 54 relie une paroi inférieure de la barre de toit 3, 4 à une paroi supérieure de la pièce support 8, 9, de sorte que lesdites deux parois se retrouvent entre la première extrémité élargie 62 et la deuxième extrémité élargie 63 du pion de fixation 54.

Par défaut, lorsque la barre de toit 3, 4 est fixée à la pièce support 8, 9 le pion de fixation 54 est coincé dans une zone rétrécie de l'ouverture 60 de la pièce terminale 59 de la tige de transmission 53. Une personne désireuse de retirer les barres de toit 3, 4 ou de les changer de place sur le toit 2 du véhicule, va activer la source énergétique 51 avec l'élément de commande, cette opération provoquant aussitôt une mise en rotation de l'axe de rotation 55 autour de son axe de révolution et sur lequel est fixé le levier 52. Il s'ensuit une mise en rotation simultanée dudit levier 52 qui va induire un déplacement de la tige de transmission 53 et donc un déplacement simultané de la pièce terminale 59 avec la même amplitude. Cette pièce terminale 59 se déplace en translation dans une direction qui est perpendiculaire à l'axe de révolution du pion de fixation 54, jusqu'à ce que la zone centrale élargie de l'ouverture 60 de ladite pièce terminale 59 arrive au niveau dudit pion de fixation 54. Ce pion de fixation 54 n'est alors plus bloqué dans la pièce terminale 59 et peut donc être manipulé aisément avec la main pour pouvoir être déplacé ou enlevé afin de désolidariser la barre de toit 3, 4 de la pièce support 8, 9.

L'élément de commande qui va activer chaque source énergétique 51 des différents mécanismes de fixation, peut se présenter sous deux formes :
- un bouton de commande qui peut par exemple être un bouton poussoir et qui est placé dans un habitacle du véhicule. Pour cette configuration, l'élément de commande n'est pas accessible par n'importe quel passant se déplaçant autour du véhicule et préserve ainsi le caractère d'inviolabilité des barres de toit 3, 4. Afin d'empêcher que le conducteur ne puisse déclencher accidentellement cet élément de commande, alors que le véhicule est dans une phase de roulage, cet élément de commande est préférentiellement placé sous une planche de bord, à côté d'une manette permettant de déverrouiller un capot avant dudit véhicule. De cette manière, le conducteur est obligé de faire une démarche volontaire pour déverrouiller les barres de toit 3, 4,
- un dispositif électronique portatif pouvant par exemple être un smartphone ou une tablette électronique. Une application particulière spécialement dédiée au déverrouillage des barres de toit 3, 4 est chargée dans ce dispositif électronique portatif, et il suffit alors pour le conducteur d'entrer dans cette application un code confidentiel, pour pouvoir activer le déverrouillage des barres de toit 3, 4.

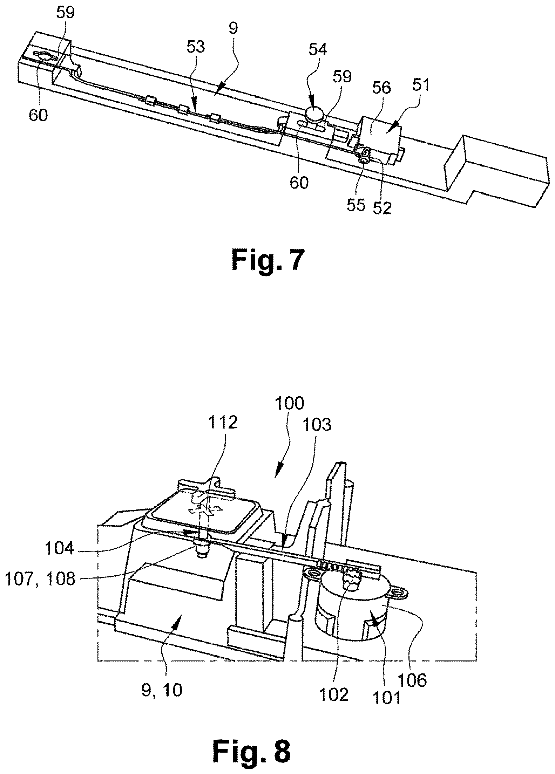

En se référant à la figure 7, dans certains cas, une barre de toit 3,4 d'un véhicule selon l'invention peut être amenée à occuper en alternance deux positions distinctes sur une même pièce support 8, 9, notamment pour passer d'une position pour laquelle elle s'étend suivant un axe longitudinal X du véhicule, à une position pour laquelle elle s'étend suivant un axe transversal Y dudit véhicule. Par exemple, la barre de toit 3, 4 peut venir se fixer à un point arrière de la pièce support 8, 9 lorsqu'elle s'étend suivant un axe longitudinal X du véhicule, et à un point avant de de ladite pièce support 8, 9 lorsqu'elle s'étend suivant un axe transversal Y dudit véhicule. Pour ce cas de figure, le mécanisme de fixation 50 va mettre en oeuvre un élément de commande, une source énergétique 51, un levier 52 fixé à un axe de rotation 55 apte à être mis en rotation sous l'effet de l'activation de ladite source énergétique 51 par l'élément de commande, et une tige de transmission 53 à deux composantes. Ainsi, une première composante de la tige 53 va se terminer par une première pièce terminale 59 dotée d'une ouverture possédant une zone élargie et une zone rétrécie, et une deuxième composante va se terminer par une deuxième pièce terminale 59 dotée d'une ouverture possédant une zone élargie et une zone rétrécie. La première composante de la tige de transmission 53 a tendance à s'étendre en s'éloignant de la source énergétique 51, la deuxième composante de ladite tige de transmission 53 ayant tendance à s'étendre vers ladite source énergétique. Ainsi, en fonction de la position du pion de fixation 54 sur la pièce support 8, 9, la source énergétique 51 va être activée de manière que ce soit, soit la première composante de la tige de transmission 53 qui va se déplacer, soit la deuxième composante de ladite tige de transmission 53 pour déverrouiller le pion de fixation 54. Pour conclure, la pièce support 8, 9 dispose d'un seul mécanisme de fixation 50 mettant en oeuvre une double tige de transmission 53 si la barre de toit 3, 4 était amenée à occuper en alternance deux positions distinctes sur ladite pièce support 3, 4.

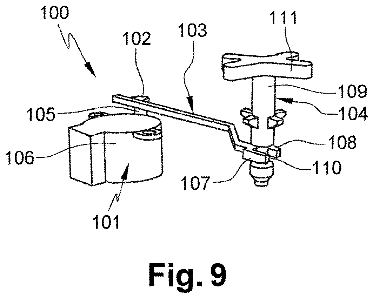

En se référant aux figures 8 et 9, un deuxième mode de réalisation d'un véhicule selon l'invention met en oeuvre un mécanisme de fixation 100 d'une barre de toit 3, 4 à une pièce support 8, 9, comprenant une source énergétique 101, une roue crantée 102, une tige de transmission 103, un pion de fixation 104 et un élément de commande apte à activer la source énergétique 101. La source énergétique est la même que celle utilisée dans le premier mode de réalisation de l'invention. La roue crantée 102 est fixée à un axe de rotation 105 cylindrique traversant un carter 106 de la source énergétique 101, ledit axe de rotation 105 étant apte à être mis en rotation autour de son axe de révolution au moyen d'une activation de ladite source énergétique 101 par l'élément de commande. L'axe de rotation 105 traverse une paroi du carter 106 et la roue crantée 102 présente une ouverture centrale par laquelle passe ledit axe de rotation 105. La roue crantée 102 est préférentiellement en contact avec la paroi du carter 106 à travers laquelle passe l'axe de rotation 105, et s'étend avantageusement dans un plan horizontal. Cette roue crantée 102 présente sur toute sa circonférence et de façon continue, des dents. La tige de transmission 103 est avantageusement rectiligne et présente au moins sur une partie de sa longueur des crans sous la forme de dents. La tige de transmission 103 s'étend préférentiellement selon un axe horizontal et est disposée par rapport à la roue crantée 102 de sorte que les dents de ladite tige de transmission 103 interagissent par engrènement avec les dents de ladite roue crantée 102. Une extrémité libre de la tige de transmission 103, considérée par rapport à un axe longitudinal de ladite tige de transmission 103 se terminent par deux bras parallèles 107, 108 et écartés, prolongeant la longueur de ladite tige de transmission 103. Le pion de fixation 104 présente un corps cylindrique 109 doté d'une zone de rétrécissement 110, et dont une extrémité élargie 111 présente un profil étoilé, préférentiellement avec quatre branches. La pièce support 3, 4 présente une ouverture 112 ayant un profil étoilé, préférentiellement avec quatre branches.

Par défaut, lorsque la barre de toit 3, 4 est fixée à la pièce support 8, 9 le pion de fixation 104 est coincé entre les deux bras parallèles 107, 108 de l'extrémité libre de la tige de transmission 103. Plus précisément, lesdits deux bras 107, 108 enserrent le pion 104 de fixation au niveau de sa zone de rétrécissement 110. Le pion de fixation 104 est placé sous l'ouverture étoilée 112 de la pièce support 8, 9 de sorte que les branches de l'extrémité étoilée 111 dudit pion de fixation 104 soient décalées par rapports aux branches de l'ouverture étoilée 112 de la pièce de fixation 8, 9. Une personne désireuse de retirer les barres de toit 3, 4 ou de les changer de place sur le toit 2 du véhicule, va activer la source énergétique 101 avec l'élément de commande, cette opération provoquant aussitôt une mise en rotation de l'axe de rotation 105 autour de son axe de révolution et sur lequel est fixée la roue crantée 102. Il s'ensuit une mise en rotation simultanée de ladite roue crantée 102 qui va induire un déplacement de la tige de transmission 103 en translation par engrènement, et donc un déplacement simultané des deux bras parallèles 107, 108 de l'extrémité libre de ladite tige de transmission 103. Ce mouvement en translation s'effectue le long d'un axe horizontal. Les deux bras 107, 108 se retirent alors du pion de fixation 104 sans plus exercer la moindre pression d'enserrement sur celui-ci. Le pion de fixation 104, qui n'est plus bloqué entre les deux bras 107, 108, peut alors être aisément manipulé avec la main pour pouvoir être déplacé ou enlevé afin de désolidariser la barre de toit 3, 4 de la pièce support 8, 9. Cette manipulation peut consister à faire pivoter le pion de fixation 104 autour de son axe de révolution pour placer les branches de son extrémité étoilée 111 en correspondance avec les branches de l'ouverture 112 étoilée de la pièce support 8, 9. De cette manière, le pion de fixation 104 peut coulisser dans ladite ouverture 112 pour être déplacé ou retiré.

Pour ce deuxième mode de réalisation d'un véhicule selon l'invention, l'élément de commande est en tout point identique à celui décrit précédemment, et correspondant au premier mode de réalisation d'un véhicule selon l'invention.

## Revendications

1. Véhicule (1) comprenant un toit (2), et deux barres (3, 4) de toit fixées chacune sur ledit toit (2) par l'intermédiaire d'au moins une pièce support (8, 9), lesdites deux barres (3, 4) étant démontables pour pouvoir passer d'une première position pour laquelle elles sont parallèles et s'étendent suivant un axe longitudinal X du véhicule, à une deuxième position qui est inclinée par rapport à la première position, **caractérisé en ce que** chaque barre (3, 4) de toit comprend pour chaque pièce support (8, 9) sur laquelle elle est montée, un mécanisme de fixation (10, 50, 100) comportant un élément de commande, une source énergétique (51, 101) pouvant être activée par ledit élément de commande, une tige (53, 103) de transmission rigide possédant deux parois en regard l'une de l'autre, et un pion (54, 104) de fixation traversant la barre (3, 4) de toit et la pièce support (8, 9) pour assurer l'arrimage de ladite barre (3, 4) de toit à ladite pièce support (8, 9), et **en ce que** la tige de transmission (53, 103) est apte à passer au moyen d'une activation de la source énergétique (51, 101) par l'élément de commande, d'une position de verrouillage pour laquelle les deux parois en regard l'une de l'autre enserrent étroitement le pion (54, 104) de fixation à une position de déverrouillage pour laquelle ladite tige (53, 103) s'est déplacée de sorte que ledit pion (54, 104) de fixation ne soit plus placé entre lesdites deux parois.

2. Véhicule selon la revendication 1, **caractérisé en ce que** la source énergétique (51, 101) est une source électrique à choisir parmi un moteur électrique pas à pas, un actionneur linéaire et un système d'asservissement.

3. Véhicule selon l'une quelconque des revendications 1 ou 2, **caractérisé en ce que** l'élément de commande est à choisir parmi un bouton de commande qui est placé dans un habitacle du véhicule et qui est facilement accessible par le conducteur dudit véhicule, et un dispositif électronique portatif doté d'une application dédiée au verrouillage/déverrouillage des barres de toit dudit véhicule.

4. Véhicule selon l'une quelconque des revendications 1 à 3, **caractérisé en ce que** le mécanisme (50) de fixation comprend un levier (52) monté en rotation sur la source énergétique (51), et **en ce qu'**une première extrémité du levier est solidarisée à un axe de rotation (55) de ladite source énergétique (51) et une deuxième extrémité dudit levier est montée articulée à une extrémité amont (57) de la tige de transmission (53), de sorte qu'une activation de la source énergétique (51) au moyen de l'élément de commande entraine une mise en rotation de l'axe (55) de rotation engendrant une mise en rotation du levier (52) s'accompagnant d'un déplacement simultané de la tige de transmission (53).

5. Véhicule selon l'une quelconque des revendications 1 à 3, **caractérisé en ce que** le mécanisme de fixation (100) comprend une roue crantée (102) solidarisée à un axe (1025) de rotation de la source énergétique (101), et **en ce que** la tige de transmission (103) présente des crans sur au moins une partie de sa longueur, de sorte qu'une activation de la source énergétique (101) au moyen de l'élément de commande entraine une mise en rotation de l'axe (105) de rotation engendrant une mise en rotation de la roue crantée (102) s'accompagnant d'un déplacement simultané en translation de la tige (103) de transmission grâce à un engrènement entre ladite roue crantée (102) et ladite tige de transmission (103).

6. Véhicule selon l'une quelconque des revendications 1 à 5, **caractérisé en ce qu'**une extrémité aval (58) de la tige (53) de transmission comporte une pièce terminale (59) dotée d'une ouverture (60) comprenant une zone élargie et au moins une zone rétrécie, et **en ce que** dans la position de verrouillage de la tige de transmission (53) le pion de fixation (55) est étroitement inséré dans ladite zone rétrécie et dans la position de déverrouillage de ladite tige (53) de transmission, ledit pion (55) se retrouve dans la zone élargie.

7. Véhicule selon la revendication 6, **caractérisé en ce que** l'ouverture (60) est allongée et la zone élargie est placée dans une zone centrale de ladite ouverture (60), et **en ce que** la pièce terminale (59) possède deux zones rétrécies placées de part et d'autre de la zone élargie centrale le long d'un axe longitudinal de ladite ouverture (60).

8. Véhicule selon l'une quelconque des revendication 1 à 5, **caractérisé en ce qu'**une extrémité aval de la tige de transmission (103) comporte une pièce terminale possédant deux bras parallèles (107, 108), et **en ce que** dans la position de verrouillage de la tige (103) de transmission le pion de fixation (105) est étroitement inséré entre lesdits deux bras (107, 108), et dans la position de déverrouillage de ladite tige (103) ledit pion de fixation (105) se retrouve en dehors de l'espace délimité par les deux bras (107, 108).

9. Véhicule selon l'une quelconque des revendications 1 à 8, **caractérisé en ce que** le pion (55) de fixation possède un corps central cylindrique (61) possédant une première extrémité (62) cylindrique élargie et une deuxième extrémité (63) cylindrique élargie dont le diamètre est supérieur à celui de la première extrémité (62) élargie.

10. Véhicule selon l'une quelconque des revendications 1 à 8, **caractérisé en ce que** le pion de fixation (105) possède sur au moins une partie de sa longueur une section transversale étoilée (111), et **en ce que** le pion de fixation (105) est inséré dans la pièce support (8, 9) en étant décalé par rapport à une ouverture étoilée (112) de ladite pièce support (8, 9) de sorte qu'une fois déverrouillé ledit pion de fixation (105) puisse être manipulé en rotation pour le mettre en correspondance avec ladite ouverture étoilée (112) afin de le faire coulisser dans celle-ci.

## Patentansprüche

1. Fahrzeug (1), welches ein Dach (2) und zwei Dachleisten (3, 4), die jeweils über mindestens ein Stützteil (8, 9) am Dach (2) befestigt sind, umfasst, wobei die zwei Leisten (3, 4) lösbar sind, um von einer ersten Position, in der sie parallel sind und sich entlang einer Längsachse X des Fahrzeugs erstrecken, in eine zweite Position übergehen zu können, die bezüglich der ersten Position geneigt ist, **dadurch gekennzeichnet, dass** jede Dachleiste (3, 4) für jedes Stützteil (8, 9), auf dem sie angebracht ist, einen Befestigungsmechanismus (10, 50, 100) umfasst, der ein Steuerelement, eine Energiequelle (51, 101), die durch das Steuerelement aktiviert werden kann, eine starre Übertragungsstange (53, 103), die zwei einander gegenüberliegende Wände besitzt, und einen Befestigungsstift (54, 104), der die Dachleiste (3, 4) und das Stützteil (8, 9) durchquert, um die Sicherung der Dachleiste (3, 4) an dem Stützteil (8, 9) zu gewährleisten, aufweist, und dadurch, dass die Übertragungsstange (53, 103) geeignet ist, mittels einer Aktivierung der Energiequelle (51, 101) durch das Steuerelement von einer Verriegelungsposition, in der die zwei einander gegenüberliegenden Wände den Befestigungsstift (54, 104) eng umschließen, in eine Entriegelungsposition überzugehen, in der die Stange (53, 103) so verlagert ist, dass der Befestigungsstift (54, 104) nicht mehr zwischen den zwei Wänden angeordnet ist.

2. Fahrzeug nach Anspruch 1, **dadurch gekennzeichnet, dass** die Energiequelle (51, 101) eine Stromquelle ist, die aus einem elektrischen Schrittmotor, einem Linear-Stellantrieb und einem Servosystem ausgewählt ist.

3. Fahrzeug nach einem der Ansprüche 1 oder 2, **dadurch gekennzeichnet, dass** das Steuerelement aus einer Bedientaste, die in einem Innenraum des Fahrzeugs angeordnet ist und die für den Fahrer dieses Fahrzeugs leicht erreichbar ist, und einer tragbaren elektronischen Vorrichtung, die mit einer für die Verriegelung/Entriegelung der Dachleisten des Fahrzeugs vorgesehenen App ausgestattet ist, ausgewählt ist.

4. Fahrzeug nach einem der Ansprüche 1 bis 3, **dadurch gekennzeichnet, dass** der Befestigungsmechanismus (50) einen Hebel (52) umfasst, der an der Energiequelle (51) drehbar gelagert ist, und dadurch, dass ein erstes Ende des Hebels mit einer Drehachse (55) der Energiequelle (51) fest verbunden ist und ein zweites Ende des Hebels gelenkig an einem vorgelagerten Ende (57) der Übertragungsstange (53) angebracht ist, derart, dass eine Aktivierung der Energiequelle (51) mittels des Steuerelements ein Drehen der Drehachse (55) zur Folge hat, das ein Drehen des Hebels (52) verursacht, welches von einer gleichzeitigen Verlagerung der Übertragungsstange (53) begleitet wird.

5. Fahrzeug nach einem der Ansprüche 1 bis 3, **dadurch gekennzeichnet, dass** der Befestigungsmechanismus (100) ein Zahnrad (102) umfasst, das mit einer Drehachse (1025) der Energiequelle (101) fest verbunden ist, und dadurch, dass die Übertragungsstange (103) auf wenigstens einem Teil ihrer Länge Rasten aufweist, derart, dass eine Aktivierung der Energiequelle (101) mittels des Steuerelements ein Drehen der Drehachse (105) zur Folge hat, das in Drehen des Zahnrads (102) verursacht, das infolge eines Zahneingriffs zwischen dem Zahnrad (102) und der Übertragungsstange (103) von einer gleichzeitigen Translationsbewegung der Übertragungsstange (103) begleitet wird.

6. Fahrzeug nach einem der Ansprüche 1 bis 5, **dadurch gekennzeichnet, dass** ein nachgelagertes Ende (58) der Übertragungsstange (53) ein Endstück (59) aufweist, das mit einer Öffnung (60) versehen ist, die einen verbreiterten Bereich und mindestens einen verengten Bereich umfasst, und dadurch, dass in der Verriegelungsposition der Übertragungsstange (53) der Befestigungsstift (55) in den verengten Bereich eng eingepasst ist und in der Entriegelungsposition der Übertragungsstange (53) der Stift (55) sich in dem verbreiterten Bereich befindet.

7. Fahrzeug nach Anspruch 6, **dadurch gekennzeichnet, dass** die Öffnung (60) lang gestreckt ist und der verbreiterte Bereich in einem zentralen Bereich der Öffnung (60) angeordnet ist, und dadurch, dass das Endstück (59) zwei verengte Bereiche besitzt, die beiderseits des zentralen verbreiterten Bereichs entlang einer Längsachse der Öffnung (60) angeordnet sind.

8. Fahrzeug nach einem der Ansprüche 1 bis 5, **dadurch gekennzeichnet, dass** ein nachgelagertes Ende der Übertragungsstange (103) ein Endstück aufweist, das zwei parallele Arme (107, 108) besitzt, und dadurch, dass in der Verriegelungsposition der Übertragungsstange (103) der Befestigungsstift (105) zwischen den zwei Armen (107, 108) eng eingepasst ist und in der Entriegelungsposition dieser Stange (103) der Befestigungsstift (105) sich außerhalb des Raumes befindet, der von den zwei Armen (107, 108) begrenzt wird.

9. Fahrzeug nach einem der Ansprüche 1 bis 8, **dadurch gekennzeichnet, dass** der Befestigungsstift (55) einen zylindrischen zentralen Körper (61) besitzt, der ein erstes verbreitertes zylindrisches Ende (62) und ein zweites verbreitertes zylindrisches Ende (63), dessen Durchmesser größer als derjenige des ersten verbreiterten Endes (62) ist, besitzt.

10. Fahrzeug nach einem der Ansprüche 1 bis 8, **dadurch gekennzeichnet, dass** der Befestigungsstift (105) auf wenigstens einem Teil seiner Länge einen sternförmigen Querschnitt (111) besitzt, und dadurch, dass der Befestigungsstift (105) in das Stützteil (8, 9) eingesetzt ist, indem er bezüglich einer sternförmigen Öffnung (112) des Stützteils (8, 9) versetzt ist, so dass der Befestigungsstift (105), sobald er entriegelt ist, durch Drehung gehandhabt werden kann, um ihn in Übereinstimmung mit der sternförmigen Öffnung (112) zu bringen, um ihn in dieser gleiten zu lassen.

## Claims

1. Vehicle (1) comprising a roof (2) and two roof bars (3, 4), which are each fixed to said roof (2) via at least one support piece (8, 9), said two bars (3, 4) being dismountable so as to be able to pass from a first position, for which they are parallel and extend along a longitudinal axis X of the vehicle, to a second position that is inclined with respect to the first position, **characterized in that** each roof bar (3, 4) comprises, for each support piece (8, 9) on which it is mounted, a fixing mechanism (10, 50, 100) having a control element, an energy source (51, 101) that can be activated by said control element, a rigid transmission rod (53, 103) having two walls facing one another, and a fixing pin (54, 104) passing through the roof bar (3, 4) and the support piece (8, 9) in order to secure said roof bar (3, 4) to said support piece (8, 9), and **in that** the transmission rod (53, 103) can pass, by means of activation of the energy source (51, 101) by the control element, from a locked position, for which the two walls facing one another tightly enclose the fixing pin (54, 104), to an unlocked position, for which said rod (53, 103) is moved so that said fixing pin (54, 104) is no longer positioned between said two walls.

2. Vehicle according to Claim 1, **characterized in that** the energy source (51, 101) is an electrical source to be selected from an electric stepper motor, a linear actuator and a servo-control system.

3. Vehicle according to either one of Claims 1 and 2, **characterized in that** the control element is to be selected from a control button that is positioned in a passenger compartment of the vehicle and that is easily accessible by the driver of said vehicle and a portable electronic device equipped with an application dedicated to locking/unlocking the roof bars of said vehicle.

4. Vehicle according to any one of Claims 1 to 3, **characterized in that** the fixing mechanism (50) comprises a lever (52) rotatably mounted on the energy source (51), and **in that** a first end of the lever is secured to a rotary shaft (55) of said energy source (51) and a second end of said lever is mounted in an articulated manner at an upstream end (57) of the transmission rod (53), such that activation of the energy source (51) by means of the control element causes the rotary shaft (55) to be rotated, which results in the lever (52) being rotated, accompanied by a simultaneous movement of the transmission rod (53).

5. Vehicle according to any one of Claims 1 to 3, **characterized in that** the fixing mechanism (100) comprises a notched wheel (102) secured to a rotary shaft (1025) of the energy source (101), and **in that** the transmission rod (103) has notches along at least part of its length, such that activation of the energy source (101) by means of the control element causes the rotary shaft (105) to be rotated, which results in the notched wheel (102) being rotated, accompanied by a simultaneous movement in translation of the transmission rod (103) by virtue of said notched wheel (102) meshing with said transmission rod (103).

6. Vehicle according to any one of Claims 1 to 5, **characterized in that** a downstream end (58) of the transmission rod (53) has an end piece (59) equipped with an opening (60) comprising a widened region and at least one narrowed region, and **in that**, when the transmission rod (53) is in the locked position, the fixing pin (55) is tightly inserted into said narrowed region and, when said transmission rod (53) is in the unlocked position, said pin (55) is in the widened region.

7. Vehicle according to Claim 6, **characterized in that** the opening (60) is elongate and the widened region is positioned in a central area of said opening (60), and **in that** the end piece (59) has two narrowed regions positioned on either side of the central widened region along a longitudinal axis of said opening (60).

8. Vehicle according to any one of Claims 1 to 5, **characterized in that** a downstream end of the transmission rod (103) has an end piece having two parallel arms (107, 108), and **in that**, when the transmission rod (103) is in the locked position, the fixing pin (105) is tightly inserted between said two arms (107, 108) and, when said rod (103) is in the unlocked position, said fixing pin (105) is outside the space delimited by the two arms (107, 108).

9. Vehicle according to any one of Claims 1 to 8, **characterized in that** the fixing pin (55) has a cylindrical central body (61) having a first widened cylindrical end (62) and a second widened cylindrical end (63) with a larger diameter than that of the first widened end (62).

10. Vehicle according to any one of Claims 1 to 8, **characterized in that** the fixing pin (105) has a star-shaped cross section (111) over at least part of its length, and **in that** the fixing pin (105) is inserted into the support piece (8, 9) while being offset with respect to a star-shaped opening (112) of said support piece (8, 9) so that, once unlocked, said fixing pin (105) can be manipulated in rotation to bring it into correspondence with said star-shaped opening (112) in order for said fixing pin to be slid into said star-shaped opening.
